Europäisches Patentamt

(19) European Patent Office

Office européen des brevets

(11) Publication number: **0 120 620**
**A2**

(12) # EUROPEAN PATENT APPLICATION

(21) Application number: **84301323.6**

(22) Date of filing: **29.02.84**

(51) Int. Cl.³: **B 66 C 23/62**
**B 66 F 11/04**

(30) Priority: **24.03.83 GB 8308088**

(43) Date of publication of application:
**03.10.84 Bulletin 84/40**

(84) Designated Contracting States:
**DE FR GB IT**

(71) Applicant: **COLES CRANES LIMITED**
**Crown Works**
**Sunderland Tyne & Wear SR4 6TT(GB)**

(72) Inventor: **Telfer, James Donald**
**4 Bowbank Close**
**Sunderland Tyne & Wear(GB)**

(74) Representative: **Allen, Oliver John Richard et al,**
**Norman House, 105-109 Strand**
**London, WC2R OAE(GB)**

(54) **Improvements in and relating to mobile cranes and/or access lift platforms.**

(57) A mobile crane has a chassis (10) comprising a horizontally disposed box member carrying axle/outrigger mountings (18,20) and on, or to, which the engine (30) and boom (26) a jib turntable (16) is mounted.

The box member is substantially unbroken/continuous along the whole length thereof, in order to provide adequate torsional resistance for high loads.

Croydon Printing Company Ltd.

1'

IMPROVEMENTS IN AND RELATING TO MOBILE CRANES

AND/OR ACCESS LIFT PLATFORMS

This invention relates to mobile cranes and access lift platforms and in particular to the chassis thereof.

Mobile cranes for use over rough terrain are known having chassis frames generally constructed from two longitudinal members which are cross-braced to provide torsional resistance. The engines for these cranes are mounted between these members, and consequently no cross-bracing is possible where the engines are mounted. This leads to flexibility and possible substantial torsional deflections, which reduces the fatigue life of the chassis and causes the wheels or outrigger feet on the side of the crane opposite to where the load is lifted, to leave the ground prematurely before the limits of stability are reached.

In accordance with the invention a mobile crane or access lift platform has a chassis comprising a horizontally disposed box member carrying axle/outrigger mountings and on, or to, which the engine and boom or jib turntable are mounted.

Such a chassis may have adequate torsional resistance so that higher loads may be lifted as compared with mobile cranes or access lift platforms having a conventional chassis.

Preferably the box member is of rectangular or trapezoidal cross section, the engine being mounted on one side to the exterior of the box member.

The engine is preferably mounted to the member offset from the vertical plane which contains the central longitudinal line of the box member.

A crane in accordance with the invention is particularly useful for 'Rough Terrain' and 'All Terrain' use.

The invention will now be described, by way of example, with reference to the accompanying drawings, in which:-

Figure 1 is side view of one embodiment of a mobile crane in accordance with the invention,

Figure 2 is a detailed side view of part of the crane of Figure 1,

Figure 3 is a part sectional plan view of the crane of Figure 1 taken along the line III - III of Figure 1,

Figure 4 is a simplified cross section of the part of the crane shown in Figure 2 taken along the line IV - IV of Figure 2, and

Figure 5 is a side view of a mobile crane in accordance with another embodiment of the invention.

Referring to the drawings the mobile crane comprises a chassis 10 carrying two axles 12 and 14, a turntable 16 and outrigger mountings 18 and 20 at each end.

The turntable 16 is rotatably mounted on the chassis through a slew ring 22, and supports a cab 24 and extendible boom 26 which in use is lifted by a jack 28.

The chassis 10 comprises a horizontally disposed and substantially unbroken box member giving good torsion resistance which is preferably trapezoidal in cross section (see Figure 4). The box member is further hollow and radially enclosed, and may be also axially enclosed to provide a completely enclosed and hollow chassis 10. The torsion-box member is substantially unbroken/continuous throughout the whole length of the crane to provide relatively high torsion resistance against any load lifted by the boom 26. Needless to say, the box member is not necessarily completely unbroken/continuous about the whole cross-section at any one point, for instance a small hole is provided on part of the upper surface at the approximate mid point of the box through which the slew ring 22 is mounted to the chassis 10, while a number of other small holes/apertures may also be provided through which electric or hydraulic control cables may pass.

Advantageously larger loads can be lifted up to the limits of stability by the crane as previously described over known cranes due to torsion resistance of the unbroken box member. In known cranes where broken chassis frames are used, smaller loads can only be lifted as outrigger feet or wheels on the side of the crane opposite to where load is lifted, leave the ground prematurely i.e., before the limits of stability are reached.

As the chassis 10 is a continuous box member, the engine 30 is mounted on one side to the exterior of the box member. In particular the engine 30 is mounted offset from the vertical plane 32 which contains the central longitudinal line 34 of the box member.

The engine 30 drives the four high flotation traction wheels on the two axles 12 and 14 through an automatic or semi-automatic torque converter transmission 36 and a splitter gearbox 38. The transmission 36 and gearbox 38 are both mounted to the box member underneath the chassis 10. In particular, to transfer the drive from the engine to the transmission 36, a gearbox 40 is provided mounted to the engine consisting of a simple train of gears.

The transmission 36 has high gear ratios to enable higher speeds to be attained for the crane. The engine 30 may be either an air-cooled engine or a water cooled engine with the radiator either mounted

5'

directly to the engine or remotely at some other convenient point on the chassis.

The mobile crane may be driven along a highway by an operator from either the cab 24 or alternatively from a chassis mounted cab 42 (see Figure 5).

A manually operated transmission may be used with the normal automotive type control mechanically linked from the cab 42.

The invention is particularly useful for 'Rough Terrain' and 'All Terrain' cranes as the four wheel drive/steering, high tractive efforts and low ground pressures provide optimum rough terrain performance. In addition the crane as disclosed has a good high speed highway performance.

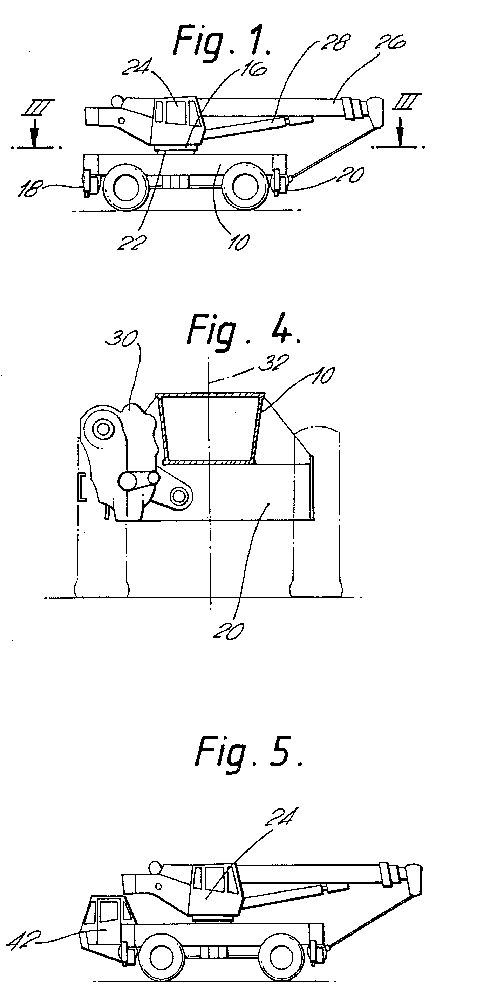

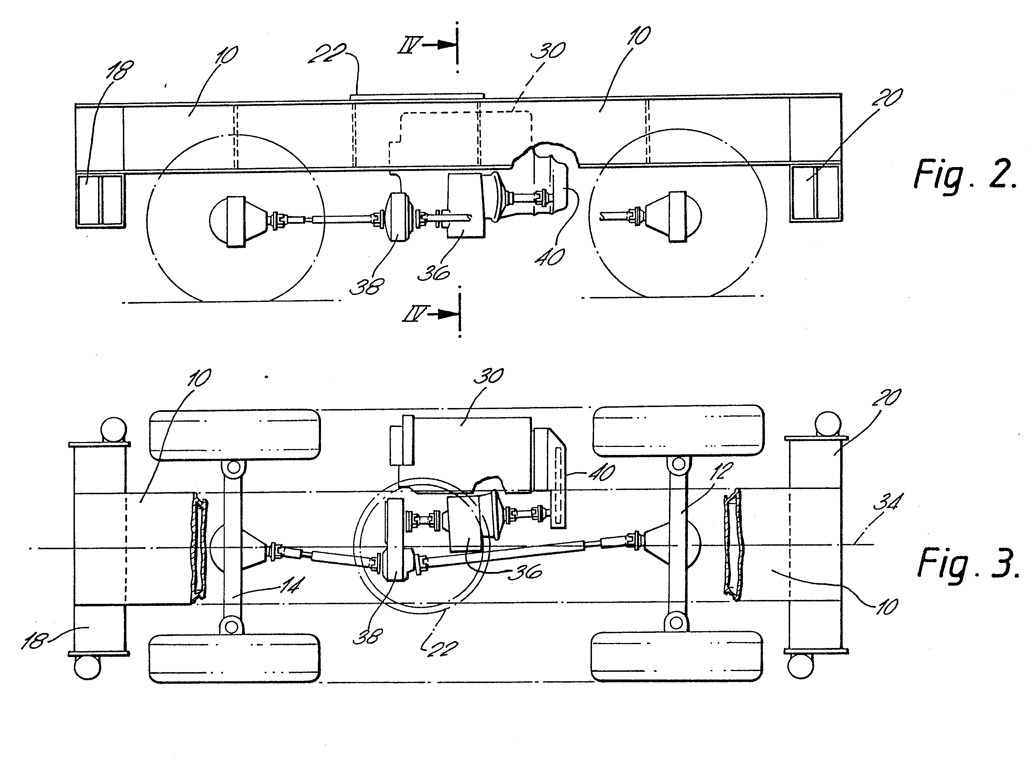

A chassis 10 as described above and shown in Figures 1 to 5, may also be used with an access lift platform. In other words, instead of a hoist load suspension cable being carried by the telescopic boom 26 as for a mobile crane, a workman's platform is supported by and at the outer end of telescopic boom 26.

CLAIMS:

1. A mobile crane or access lift platform having a chassis comprising a horizontally disposed box member carrying axle/outrigger mountings and on, or to, which the engine and boom or jib turntable is mounted.

2. A mobile crane or access lift platform as claimed in Claim 1 wherein the whole length of the box member is substantially unbroken/continuous.

3. A mobile crane or access lift platform as claimed in either Claim 1 or 2 wherein the box member is hollow and radially enclosed.

4. A mobile crane or access lift platform as claimed in any preceding Claim wherein the box member is of rectangular or trapezoidal cross sections.

5. A mobile crane or access lift platform as claimed in any preceding claim wherein the engine is mounted to one side of the box member.

6. A mobile crane or access lift platform as claimed in any preceding claim wherein the engine is mounted to the exterior of the box member.

7. A mobile crane or access lift platform as claimed in any preceding claim wherein the engine is mounted offset from the vertical plane which contains the central longitudinal line of the box member.

8.    A mobile crane or access lift platform as claimed in any preceding claim having four wheel drive.

9.    A mobile crane or access lift platform substantially as herein described with reference to the accompanying drawings.

112

**Fig. 1.**

**Fig. 4.**

**Fig. 5.**

Fig. 2.

Fig. 3.